# EUROPEAN PATENT SPECIFICATION

(11) **EP 3 520 942 B1**
(45) Date of publication and mention of the grant of the patent: **22.12.2021**
(21) Application number: 19152649.0
(22) Date of filing: 18.01.2019
(51) Int. Cl.: B23D 51/10

(54) **JIGSAW WITH BLADE CLAMPING MECHANISM**
STICHSÄGE MIT BLATTKLEMMMECHANISMUS
SCIE SAUTEUSE AVEC MÉCANISME DE SERRAGE DE LAME

(30) Priority: 31.01.2018 CN 201810095825
(43) Date of publication of application: 07.08.2019
(73) Proprietor: Techtronic Cordless GP, Anderson, SC 29621 (US)
(72) Inventor: Hu, Lei, Dongguan City, Guangdong (CN); Qiu, Xiaoping, Dongguan City, Guangdong (CN); Yan, Jizhou, Dongguan City, Guangdong (CN)
(74) Representative: Novagraaf Group

(56) References cited:
- US-A- 5 306 025
- US-A- 5 903 983
- US-A1- 2007 131 076

## Description

### FIELD OF THE DISCLOSURE

The disclosure relates to a jig saw, and more particularly to a clamping member for clamping a saw blade in a jig saw.

### BACKGROUND

Jig saws are widely used for cutting various sheets such as those made from wood and metal, and are suitable for cutting curved shapes on these sheets. The working principle of jig saws is that by rotation of a motor, the saw blade is driven for reciprocating movement through a conversion mechanism. Since the saw blade is easily worn after a large number of cutting operations, the saw blade clamping mechanism of jig saws is usually designed to clamp or unlock the saw blade by human hands, thereby facilitating replacement of the worn saw blade by the user.

However, mechanisms for clamping the saw blade in the existing jig saws are not fully up to expectations. For example, many clamping mechanisms in jig saws can only be used with saw blades of a particular shape, such as a T-saw blade with a T-shaped end, or a U-saw blade with a U-shaped end, but not both. Such a design results in limited types of saw blade that can be used by the jig saws, which is not convenient for the user's operation. In addition, many clamping mechanisms require the user to perform complicated operations to lock or unlock the saw blade, or require a large strength to use, which is inconvenient for the user. US5306025 discloses a jig saw as per the preamble of appended claim 1. US2007131076 discloses another jig saw.

### SUMMARY

The present invention provides a jig saw according to appended claim 1. The jig saw comprises a clamping assembly for removably clamping a saw blade and a drive mechanism. The clamping assembly is connected to the drive mechanism. The clamping assembly comprises an actuating member and a clamping member. The actuating member is configured to rotate about a first axis to drive the clamping member to effect locking or unlocking of the saw blade.

The first axis is substantially parallel to a length direction of the saw blade when it is installed on the jig saw.

The clamping assembly further comprises a motion conversion mechanism adapted to convert a rotational motion about the first axis to a linear motion along the length direction.

The motion conversion mechanism comprises an intermediate member and a fixing member. The intermediate member comprises one of an internal thread and an external thread, and the fixing member is fixedly connected to the drive member and comprises the other one of the internal thread and the external thread. The intermediate member is adapted to be driven by the actuating member to rotate around the fixing member, and during the rotation the intermediate member simultaneously moves relative to the fixing member linearly.

The clamping member comprises a body and a clamping piece. The body acts as the fixing member of the motion conversion mechanism. The clamping piece is adapted to be driven by the intermediate member to perform the linear motion, and the clamping piece is adapted to move along a second axis during the linear motion to effect locking or unlocking of the saw blade.

The clamping piece is a locking pin and the body includes a chute; said locking pin is received within the chute and adapted to move along the chute. The orientation of the chute is neither parallel to the first axis nor perpendicular to the first axis.

The second axis may be parallel to a width direction of the saw blade when it is installed on the jig saw.

The clamping assembly may further contain a biasing member adapted to bias the actuating member, such that the clamping member is at a locked position when no external force is applied.

The clamping assembly may be suitable for both a U-shank saw blade and a T-shank saw blade.

The jig saw in the present invention thus overcomes the aforementioned technical problems. First, since the pressure is applied to the side of the saw blade by the clamping mechanism of the jig saws by means of the clamping member, and then the saw blade is pressed against the body and be fixed on the body, the clamping mechanism can be applied to different types of saw blades regardless of the shape of the end face of the clamping end (for example, V-shaped or U-shaped). Rather, since the saw blades each have a shape of a strip with a substantially thin sheet shape, the clamping mechanism of the present invention can firmly clamp the saw blades. Such a design greatly expands the type of saw blade that can be used on the same jig saw, which allows the user to easily load different types of saw blades on the jig saw without any need of replacing the jig saw or using additional tools.

### BRIEF DESCRIPTION OF THE DRAWINGS

The performances and advantages of the present invention will be further understood by reference to the rest of the specification and the accompanying drawings. The reference numerals in the accompanying drawings are the same for each component. In some cases, a sub-tag is placed after a label and hyphen to represent one of many similar components. When referring to a label but not specifically stating one existing sub-tag, it refers to all of these similar components.
Fig. 1 is a schematic view of the appearance of a clamping mechanism in a jig saw according to one embodiment of the present invention, wherein the rotating lever is displayed in a translucent manner to show other components located inside thereof.
Fig. 2 is an exploded view of the components of the clamping mechanism of Fig. 1.
Fig. 3 is an enlarged perspective view showing a locking pin and peripheral members in the clamping mechanism of Fig. 1.
Fig. 4 shows the appearance of the intermediate member of the clamping mechanism of Fig. 1 alone.
Fig. 5 is an enlarged schematic view of the motion conversion mechanism of the clamping mechanism of Fig. 1, and the intermediate member is translucent to show the threads therein.
Fig. 6 is a schematic view showing the operation process of the clamping mechanism of Fig. 1.
Fig. 7 is a schematic view showing the clamping mechanism of Fig. 1 clamping a T-shank saw blade.
Fig. 8 is a schematic view showing the clamping mechanism of Fig. 1 clamping a U-shank saw blade.

### DETAILED DESCRIPTION OF PREFERRED EMBODIMENTS

Embodiments of the present invention use a motion conversion mechanism to convert the rotation of the rotary lever by the users into a tilted linear motion of the clamping mechanism, thus such a tilted linear motion enables the saw blade to be clamped or unlocked. Other different benefits and advantages provided by the various embodiments of the present invention can be easily apparent from the following description.

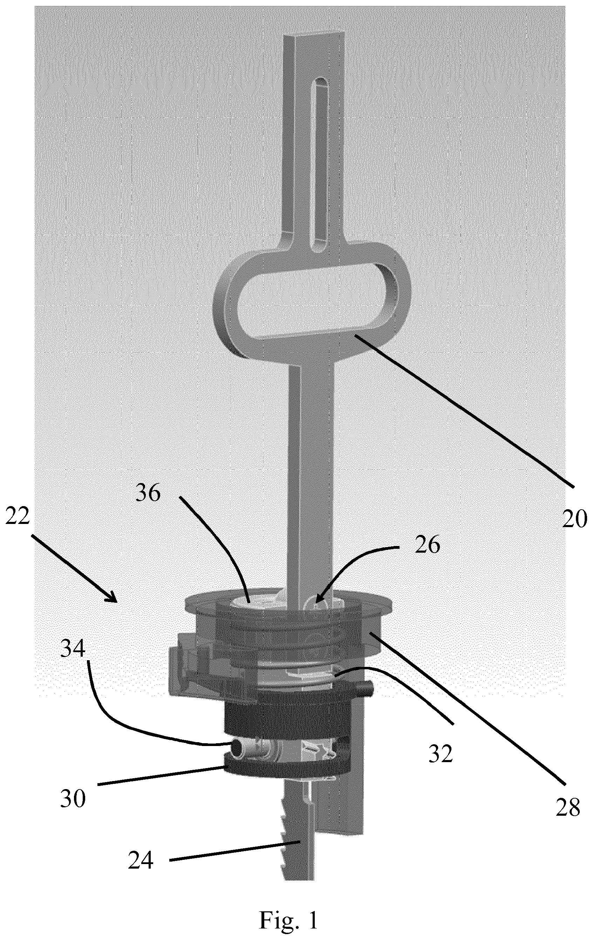

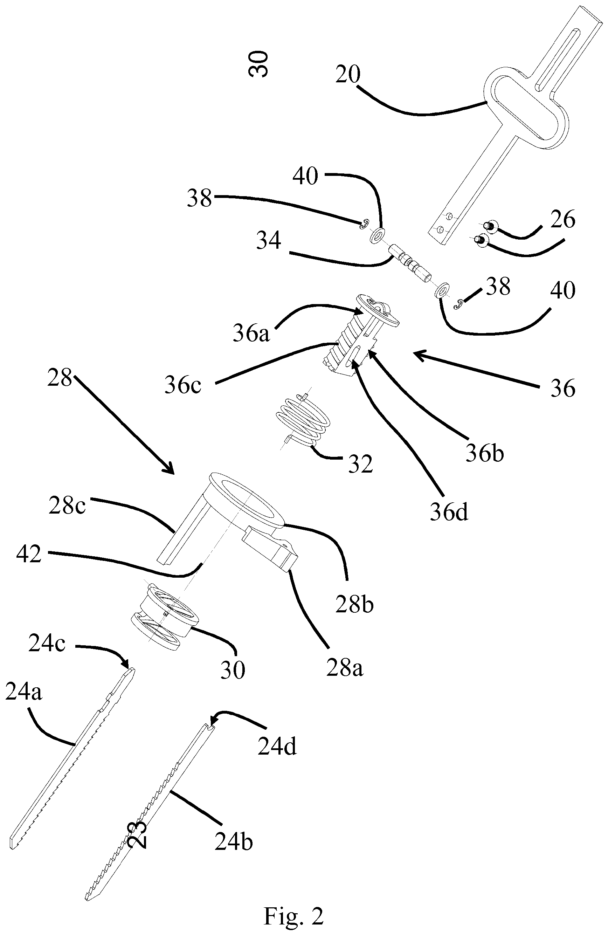

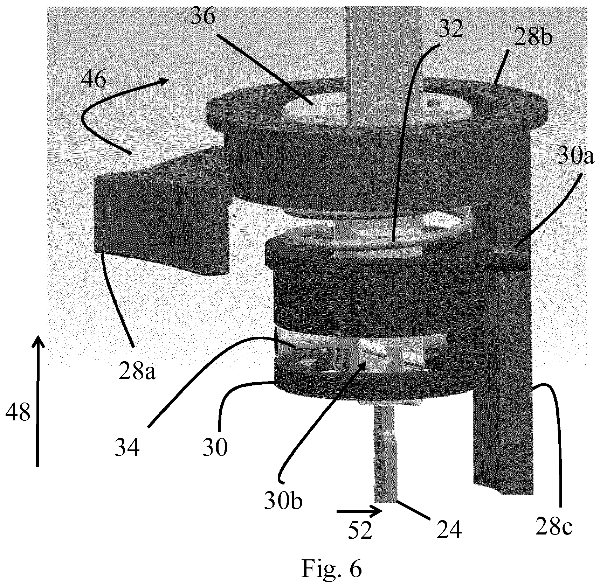

Referring firstly to Figs. 1 and 2, a first embodiment of the present invention discloses a jig saw (not shown in its entirety), including a clamping assembly 22, a plunger 20 connected to the clamping assembly 22, and a saw blade 24 removably mounted to the clamping assembly 22. The saw blade 24 shown here is in the final status of installation, and the length direction of the saw blade 24 (and also the length direction of the plunger 20) is generally parallel to a first axis 42. It can be seen that the first axis 42 is not parallel to the thickness direction 52 of the saw blade 24 when it is installed on the jig saw (see the thickness direction 52 shown in Fig. 6). Here, the plunger 20 is, as a part of the driving mechanism of the jig saw, adapted to transmit a driving force generated by a motor (not shown) to the clamping assembly 22 in a reciprocating manner. The plunger 20 has a generally elongated shape well known to those skilled in the art, the ends of which being connected to the clamping assembly 22 by bolts 26. The clamping assembly 22 specifically includes a rotating lever 28, a sleeve 30, a spring 32, a locking pin 34, a body 36.

Here, the body 36 is fixedly connected to the plunger 20 by two of the above-described bolts 26, so that the body 36 is adapted to reciprocate with the plunger 20. The two bolts 26 are arranged along the length direction of the plunger 20. A rotary lever 28 is nested and provided outside of the body 36. It is to be noted that the rotary lever 28 can rotate relative to the body 36, and does not move with the body 36 while the body 36 reciprocates, but remains stationary. The sleeve 30 is also nested and provided outside of the body 36, but the sleeve 30 and the rotary lever 28 are respectively nested and provided at positions of the body 36 near the ends thereof. The sleeve 30, as an intermediate member, is adapted to rotate and linearly move relative to the body 36. Such a linear motion occurs in the direction of the first axis 42. The sleeve 30 is connected to the body 36 by a spring 32. The saw blade 24 is removably mounted to the lower end of the body 36 near the position of the sleeve 30.

In the present embodiment, the rotary lever 28 is an actuating member that is in contact with the user's finger for being rotated by the user to effect clamping or unlocking of the saw blade 24 by the clamping assembly 22. As most clearly shown in Fig. 2, the rotary lever 28 includes three portions that are connected together, i.e., a connecting ring 28b that is adapted to fit over the body 36, a handle 28a connected to the outer peripheral surface of the connecting ring 28b and projecting generally radially outwardly, and an actuating lever 28c extending from the connecting ring 28b along the first axis 42. The handle 28a is adapted to be contacted and pulled by a user's finger, and such a pulling causes the rotation of the connecting ring 28b such that the actuating lever 28c also rotates with the connecting ring 28b.

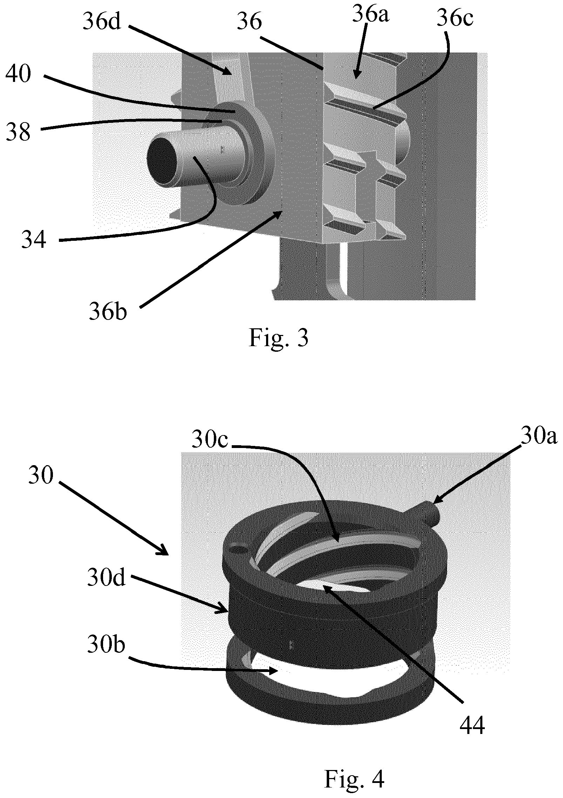

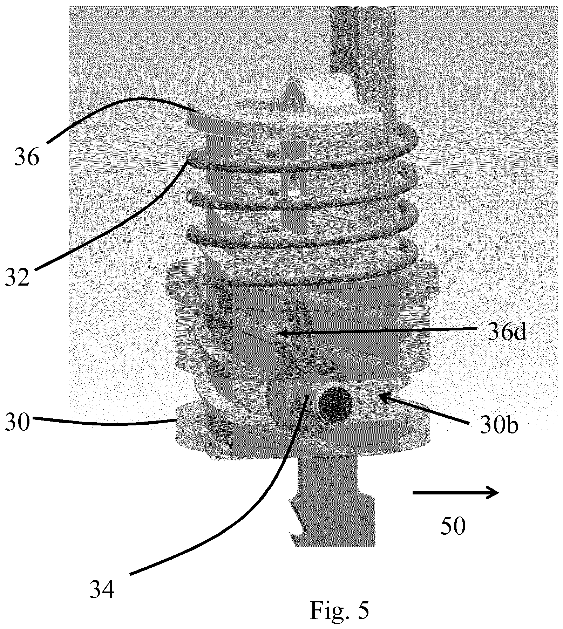

As also clearly shown in Fig. 2, the body 36 has a generally elongated shape. On its side surface, there are external threads 36c. It is to be noted that the body 36 does not have a cylindrical appearance, but has a shape similar to a rectangle on a portion thereof having the external threads 36c. Specifically, by reference to Figs. 2 and 3, the external thread 36c only exists on two surfaces of the four circumferential side surfaces, which are opposite and curved surfaces 36a. Thus, the two curved surfaces 36a together form an arc that is similar to a portion of the side of the cylinder, such that the body can be rotationally coupled to other components by the external threads 36c. However, the other two of the four side surfaces of the body 36 do not have external threads 36c, but they exist as planes 36b. These two planes are primarily intended to form a chute 36d that extends transversely through the entire body 36. The locking pin 34 can be retained in the chute 36d by its E-ring 38 and washer 40, respectively, near the ends thereof (as shown in Fig. 3), but the locking pin 34 can move in the chute 36d relative to the body 36. It can be seen that the locking pin 34 is perpendicular to the plane 36b described above, but is generally parallel to the curved surface 36a described above. The orientation of the chute 36d is not parallel to the first axis 42 nor perpendicular thereto. In particular, the locking pin 34 can move simultaneously along the first axis 42 relative to the body 36 and along a second axis 50 parallel to the width direction of the saw blade 24 in the installation site (shown in Fig. 5). This will be described in detail below. The body 36 and the locking pin 34 together form a clamping part in the clamping member because the locking pin 34 can abut against the saw blade 24 and press it against the inner wall of the body 36, thereby achieving clamping of the saw blade 24.

Turning now to Fig. 4, the sleeve 30 has a generally cylindrical shape with a hollow portion 44 formed in the center thereof, thereby allowing the body 36 to pass therethrough. On the inner wall of the sleeve 30 adjacent to the hollow portion 44, internal threads 30c are formed. The internal threads 30c are adapted to connect with the external thread 36c on the body 36 described above. On the outer peripheral surface of the sleeve 30, a radially projecting stopper 30a is formed for contacting and cooperating with the actuating lever 28c of the rotary lever 28 described above. On the side surface 30d of the sleeve 30 near one end thereof, a sliding chute 30b for receiving a portion of the locking pin 34 described above is provided in the circumferential direction. It is to be noted that the sliding chute 30b does not have a length around the entire circumference (i.e., 360°).

Fig. 5 shows how the sleeve 30 is connected to the body 36 by the spring 32 and the locking pin 34. The rotary lever 28 is omitted here for clearer display. The sleeve 30 is threadedly connected to the body 36 by threads as described above, so that the sleeve 30 can rotate and linearly move relative to the body 36 at the same time. The spring 32 connects the sleeve 30 and the body 36 and as a biasing member biases the sleeve 30 in the locked position as shown in Fig. 5. In addition, each of the ends of the locking pin 34 sequentially passes through the chute 36d on the body 36 and the sliding chute 30b on the sleeve 30. The E-ring 38 and the washer 40 are located between the chute 36d and the sliding chute 30b, and as a spacer to prevent the motion of the locking pin 34 in the chute 36d and the frictional interference in the motion in the sliding chute 30b. The sleeve 30 and the body 36 described above constitute a motion conversion mechanism of the clamping member in the present embodiment, which is adapted to convert the rotation about the first axis 42 into a linear motion in the direction of the first axis 42.

Also shown in Fig. 2 are two exemplary saw blades that can be used in the jig saw in this embodiment, namely a T-shank saw blade 24a and a U-shank saw blade 24b, respectively. The main difference between the two is that the tip end of the clamping end of the T-shank saw blade 24a has an inverted "V" shape, and a recess and a pair of protrusions are formed in the subsequent portion of the inverted "V" shape, thereby forming a shape similar to the shape of the letter "T". The U-shank saw blade 24b does not have the above-described recesses and projections, and its clamping end has a generally straight appearance, but the tip end of the U-shank saw blade 24b has a U-shape, which is also the origin of its name.

Let us now look at the working principle of the jig saws clamping member in the above embodiment. Fig. 6 shows how to operate the rotary lever by the user to unlock or clamp the saw blade 24 inserted into the clamping assembly. Specifically, as described above, if there is no external force interference by the user, the clamping assembly is in the clamped position by default, which is achieved by the spring 32 applying a pressure to the sleeve 30. If the user wants to remove the saw blade 24 that is being clamped, the user manually pulls the handle 28a in a clockwise direction as indicated by arrow 46. The rotation of the handle 28a causes the connecting member 28b, and the actuating lever 28c connected to the connecting member 28b to rotate around the body 36. Since the actuating lever 28c abuts against the stopper 30a on the sleeve 30, the clockwise rotation of the actuating lever 28c drives the sleeve 30 to simultaneously rotate. However, the sleeve 30 is connected to the body 36 by threads as described above, so the sleeve 30 is driven to rotate while moving upward in the direction indicated by the arrow 48 due to the threads. At the same time, since the locking pin 34 is caught in the sliding chute 30b of the sleeve 30, and the sliding chute 30b has a circumferentially extending direction substantially perpendicular to the first axis 42, the sleeve 30 moving upward along the first axis 42 will force the locking pin 34 to move upwardly at the same time. Upward motion of the locking pin 34 is possible because the locking pin 34 is received in a chute (not shown in Fig. 6) of the body 36, which allows the locking pin 34 to move upwardly along the direction of the first axis and simultaneously move in a direction away from the saw blade 24 in the direction of the second axis. Neither the first axis nor the second axis is shown in Fig. 6, but is shown in Figs. 2 and 5, respectively. As a result, the locking pin 34 no longer contacts the saw blade 24, thereby releasing the clamping of the saw blade 24. The user can then remove the saw blade 24 and replace it with a new one. During this process, one of the user's hands must always pull the handle 28a to overcome the elastic force of the spring 32, otherwise the clamping assembly will automatically return to the clamping position. If the new saw blade is replaced and is in the clamping assembly, the user can release the handle 28a and the clamping assembly re-clamps the saw blade by the exact opposite course of the process described above.

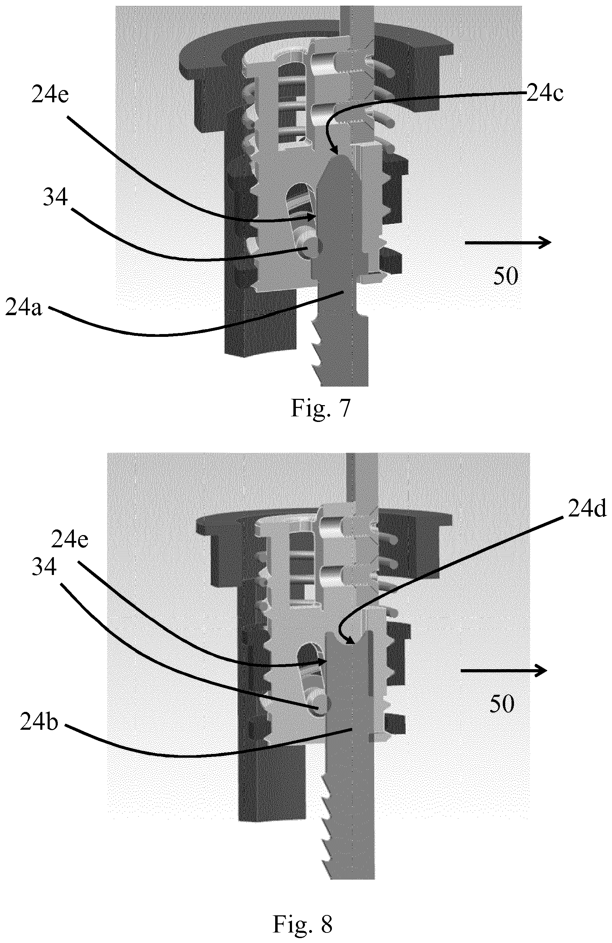

Figs. 7 and 8 are schematic views respectively showing the clamping of T-shank saw blade 24a and the U-shank saw blade 24b by the jig saw clamping member in the above-described embodiment. The common point of the two types of saw blades when they are clamped is that there is no mechanism in the clamping mechanism that needs to contact the tip end face 24c of the T-shank saw blade 24a or the tip end face 24d of the U-shank saw blade 24b. In contrast, the above-described locking pin 34 merely abuts against the side edge 24e of the T-shank saw blade 24a or the U-shank saw blade 24b, that is, applies clamping force along the width direction of the T-shank saw blade 24a and the U-shank saw blade 24b. Such a design can correspond not only to the T-shank saw blade 24a and the U-shank saw blade 24b, but also to any other type of saw blades.

Having thus described several embodiments, those skilled in the art will recognize that various modifications, other structures, and equivalents can be used without departing from the scope of the appended claims. Correspondingly, the above description should not be taken as limitation to the scope of the invention as defined by the following claims.

For example, in the above embodiment, the locking pin is used to clamp the side edge of the saw blade (i.e., the edge having thickness). However, in other variations, the invention may also be designed to clamp the side surface of the saw blade (i.e., the side having the width) by means of a locking pin.

## Claims

1. A jig saw, comprising a clamping assembly (22) for removably clamping a saw blade (24) and a drive mechanism (20), wherein the clamping assembly is connected to the drive mechanism and comprises an actuating member (28) and a clamping member (34, 36); the actuating member configured to rotate about a first axis (42) to drive the clamping member to effect locking or unlocking of the saw blade; wherein the first axis is substantially parallel to a length direction of the saw blade when it is installed on the jig saw; the clamping assembly further comprising a motion conversion mechanism (30, 36) adapted to convert a rotational motion about the first axis to a linear motion along the length direction; the motion conversion mechanism comprising an intermediate member (30) and a fixing member (36); the intermediate member comprising one of an internal thread (30c) and an external thread, and the fixing member fixedly connected to the drive member and comprising the other one of the internal thread and the external thread (36c); the intermediate member adapted to be driven by the actuating member to rotate around the fixing member, and during the rotation the intermediate member simultaneously moving relative to the fixing member linearly; the clamping member comprising a body (36) and a clamping piece (34); the body acting as the fixing member of the motion conversion mechanism; the clamping piece adapted to be driven by the intermediate member to perform the linear motion, and the clamping piece adapted to move along a second axis during the linear motion to effect locking or unlocking of the saw blade; **characterized in that** the clamping piece is a locking pin and said body includes a chute (36d); said locking pin received within said chute and adapted to move along the chute; the orientation of the chute being neither parallel to the first axis nor perpendicular to the first axis.

2. The jig saw according to claim 1, wherein the second axis is parallel to a width direction of the saw blade (24) when it is installed on the jig saw.

3. The jig saw according to claim 1, wherein the clamping assembly (22) further comprises a biasing member (32) adapted to bias the actuating member (28), such that the clamping member is at a locked position when no external force is applied.

4. The jig saw according to claim 1, wherein the clamping assembly (22) is suitable for both a U-shank saw blade (24b) and a T-shank saw blade (24a).

## Patentansprüche

1. Stichsäge, umfassend eine Klemmanordnung (22) zum lösbaren Klemmen eines Sägeblatts (24) und einen Antriebsmechanismus (20), wobei die Klemmanordnung mit dem Antriebsmechanismus verbunden ist und ein Betätigungselement (28) und ein Klemmelement (34, 36) umfasst; wobei das Betätigungselement konfiguriert ist, um sich um eine erste Achse (42) zu drehen, um das Klemmelement anzutreiben, um ein Verriegeln oder Entriegeln des Sägeblatts zu bewirken; wobei die erste Achse im Wesentlichen parallel zu einer Längsrichtung des Sägeblatts ist, wenn es an der Stichsäge installiert ist; wobei die Klemmanordnung ferner einen Bewegungsumwandlungsmechanismus (30, 36) umfasst, der dazu ausgelegt ist, eine Drehbewegung um die erste Achse in eine lineare Bewegung entlang der Längsrichtung umzuwandeln; wobei der Bewegungsumwandlungsmechanismus ein Zwischenelement (30) und ein Befestigungselement (36) umfasst; wobei das Zwischenelement eines von einem Innengewinde (30c) und einem Außengewinde umfasst, und wobei das Befestigungselement fest mit dem Antriebselement verbunden ist und das andere des Innengewindes und des Außengewindes (36c) umfasst; wobei das Zwischenelement dazu ausgelegt ist, durch das Betätigungselement angetrieben zu werden, um sich um das Befestigungselement zu drehen, und sich während der Drehung das Zwischenelement gleichzeitig linear relativ zu dem Befestigungselement bewegt; wobei das Klemmelement einen Körper (36) und ein Klemmstück (34) umfasst; wobei der Körper als das Befestigungselement des Bewegungsumwandlungsmechanismus wirkt; wobei das Klemmstück dazu ausgelegt ist, durch das Zwischenelement angetrieben zu werden, um die lineare Bewegung auszuführen, und das Klemmstück dazu ausgelegt ist, sich während der linearen Bewegung entlang einer zweiten Achse zu bewegen, um ein Verriegeln oder Entriegeln des Sägeblatts zu bewirken; **dadurch gekennzeichnet, dass** das Klemmstück ein Verriegelungsstift ist und der Körper eine Rutsche (36d) umfasst; wobei der Verriegelungsstift in der Rutsche aufgenommen ist und angepasst ist, um sich entlang der Rutsche zu bewegen; wobei die Ausrichtung der Rutsche weder parallel zur ersten Achse noch senkrecht zur ersten Achse ist.

2. Stichsäge nach Anspruch 1, wobei die zweite Achse parallel zu einer Breitenrichtung des Sägeblatts (24) ist, wenn es an der Stichsäge installiert ist.

3. Stichsäge nach Anspruch 1, wobei die Klemmanordnung (22) ferner ein Vorspannelement (32) umfasst, das dazu ausgelegt ist, das Betätigungselement (28) vorzuspannen, so dass sich das Klemmelement in einer verriegelten Position befindet, wenn keine äußere Kraft ausgeübt wird.

4. Stichsäge nach Anspruch 1, wobei die Klemmanordnung (22) sowohl für ein U-Schenkelsägeblatt (24b) als auch für ein T-Schenkelsägeblatt (24a) geeignet ist.

## Revendications

1. Scie sauteuse, comprenant un ensemble de serrage (22) pour serrer de manière amovible une lame de scie (24) et un mécanisme d'entraînement (20), dans laquelle l'ensemble de serrage est connecté au mécanisme d'entraînement et comprend un élément d'actionnement (28) et un élément de serrage (34, 36) ; l'élément d'actionnement configuré pour tourner autour d'un premier axe (42) pour entraîner l'élément de serrage pour effectuer un verrouillage ou un déverrouillage de la lame de scie ; dans laquelle le premier axe est sensiblement parallèle à une direction en longueur de la lame de scie lorsqu'elle est installée sur la scie sauteuse ; l'ensemble de serrage comprenant en outre un mécanisme de conversion de mouvement (30, 36) adapté pour convertir un mouvement de rotation autour du premier axe en un mouvement linéaire le long de la direction en longueur ; le mécanisme de conversion de mouvement comprenant un élément intermédiaire (30) et un élément de fixation (36) ; l'élément intermédiaire comprenant l'un parmi un filetage interne (30c) et un filetage externe, et l'élément de fixation connecté de manière fixe à l'élément d'entraînement et comprenant l'autre parmi le filetage interne et le filetage externe (36c) ; l'élément intermédiaire adapté pour être entraîné par l'élément d'actionnement pour tourner autour de l'élément de fixation, et lors de la rotation l'élément intermédiaire se déplaçant simultanément par rapport à l'élément de fixation linéairement ; l'élément de serrage comprenant un corps (36) et une pièce de serrage (34) ; le corps agissant comme l'élément de fixation du mécanisme de conversion de mouvement ; la pièce de serrage adaptée pour être entraînée par l'élément intermédiaire pour réaliser le mouvement linéaire, et la pièce de serrage adaptée pour se déplacer le long d'un deuxième axe lors du mouvement linéaire pour effectuer un verrouillage ou un déverrouillage de la lame de scie ; **caractérisée en ce que** la pièce de serrage est une goupille de verrouillage et ledit corps inclut une goulotte (36d) ; ladite goupille de verrouillage reçue à l'intérieur de ladite goulotte et adaptée pour se déplacer le long de la goulotte ; l'orientation de la goulotte n'étant ni parallèle au premier axe ni perpendiculaire au premier axe.

2. Scie sauteuse selon la revendication 1, dans laquelle le second axe est parallèle à une direction en largeur de la lame de scie (24) lorsqu'elle est installée sur la scie sauteuse.

3. Scie sauteuse selon la revendication 1, dans laquelle l'ensemble de serrage (22) comprend en outre un élément de sollicitation (32) adapté pour solliciter l'élément d'actionnement (28), de telle sorte que l'élément de serrage est dans une position verrouillée lorsqu'aucune force externe n'est appliquée.

4. Scie sauteuse selon la revendication 1, dans laquelle l'ensemble de serrage (22) est apte à la fois pour une lame de scie à tige en U (24b) et une lame de scie à tige en T (24a).
